# EUROPEAN PATENT SPECIFICATION

(11) **EP 1 658 686 B1**
(45) Date of publication and mention of the grant of the patent: **23.10.2013**
(21) Application number: 04726334.8
(22) Date of filing: 07.04.2004
(51) Int. Cl.: H04B 7/02, H04B 7/08, H04B 7/06

(54) **SIGNAL PROCESSING APPARATUS AND METHOD OF MULTI INPUT MULTI OUTPUT COMMUNICATION SYSTEM**
VORRICHTUNG UND VERFAHREN ZUR SIGNALVERARBEITUNG EINES MEHREINGANG-MEHRAUSGANG-KOMMUNIKATIONSSYSTEMS
DISPOSITIF ET PROCEDE DE TRAITEMENT DE SIGNAL POUR SYSTEME DE COMMUNICATION MULTI-ENTREE/MULTI-SORTIE

(43) Date of publication of application: 24.05.2006
(73) Proprietor: LG Electronics Inc., Seoul 150-010 (KR)
(72) Inventor: SHIM, Dong-Hee, Seoul 151-903 (KR); SEO, Dong-Youn, Seoul 135-830 (KR); KIM, Bong-Hoe, AnsanGyeonggi-Do 426-180 (KR)
(74) Representative: Katérle, Axel
(86) International application number: PCT/KR2004/000808
(87) International publication number: WO 2005/099126

(56) References cited:
- EP-A1- 1 337 082
- JP-A- 2003 198 382
- JP-A- 2003 304 176
- US-A1- 2003 103 584

## Description

### BACKGROUND OF THE INVENTION

### 1. Field of the Invention

The present invention relates to a signal processing apparatus and method in a communication system called a multi-input/multi-output (MIMO) system in which transmitting and receiving ends commonly use multiple antennas

### 2. Description of the Related Art

In the field of the related art, the MIMO mobile communication system is known to achieve more enhanced capability compared to a single antenna system, namely, a single antenna-to-single antenna or a multi-antenna-to-single antenna system.

However, to attain such improvement, an abundant scattering environment should be provided so that signals reaching to mu Itiple reception antennas cannot be correlated. If the correlation among signals is neglected, performance would be degraded and capability would be reduced.

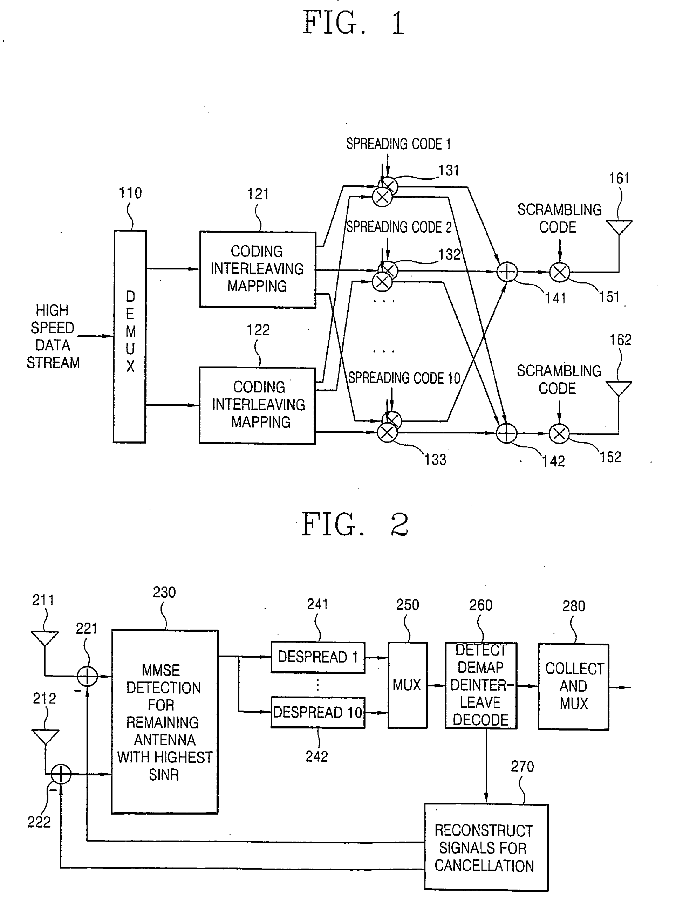

Figures 1 and 2 show a related art MIMO communication system employing a PARC (Per-Antenna Rate Control) method.

The PARC refers to a method based on the construction of a V-BLAST (Vertical Bell Laboratories Layered Space Time) system, one of conventional techniques of the MIMO system, in which symbols of signals are differently channel-coded and modulated according to each transmission antenna in a transmitting end with reference to channel information determined at a receiving end and then the corresponding signals are transmitted through each transmission antenna.

Figure 1 is a view showing the construction of the transmitting end of the related art MIMO communication system employing the PARC method. The operation of the MIMO communication system employing the PARC method will now be described with reference to Figure 1.

High speed data streams sequentially generated from the transmitting end is demultiplexed through a demultiplexer DEMUX 110 so as to be transmitted from each of multiple transmission antennas. Herein, the demultiplexing means dividing consistent data into a plurality of sub-data according to a determined regulation. Figu re 1 shows two antennas for the sake of explanation.

The demultiplexed sub-streams of each transmission antenna are coded and interleaved in signal processors 121 and 122, and then mapped to a symbol, respectively.

The mapped symbols are inputted to a spreader 131 in which a spreading code1 is multiplied thereto, coded into a scrambling code, and then transmitted to respective transmission antennas 161 and 162.

If a user occupies 10 channels discriminated by the spreading code, the divided sub-streams are divided again into 10 sub-streams, respectively. Respective divided data symbols are inputted into spreaders 131∼133, in which each spreading code 1∼10 is multiplied thereto, added in adders 141 and 142, coded into a scrambling code, and then, transmitted through respective transmission antennas 161 and 162. Herein, generally, one scrambling code is allocated per user. The number of bits allocated to the transmission antennas 161 and 162 can differ depending on a designated data rate.

The coding is made only in a temporal dimension, so its data restoration performance is not as high as that in the space-time coding which is used in a single-rate system. The coding in the temporal domain allows post-decoding interference cancellation, by which performance of a receiver is enhanced.

Figure 2 is a view showing the construction of a receiving end of the related art MIMO communication system employing the PARC method. The operation of the receiving end of the MIMO communication system employing the PARC method will now be described with reference to Figure 2.

After the data is demultiplexed and then coded into the scrambling code in the transmitting end, the signals of each transmission antenna can be independently decoded in the receiving end as shown in Figure 2.

In other words, when the reception antennas 211 and 212 receive the symbol, symbols of each channel are estimated in a symbol detector according to a minimum mean square error (MMSE) method, despread and multiplexed by despreaders 241 and 242 and a multiplexer 250 so that a signal with respect to one antenna can be detected, and the detected signal is relocated (demapped), deinterleaved and then decoded in a signal processor 260.

Thereafter, a signal with respect to the antenna is reconfigured in a signal remover 270 based on the decoded bits and then the reconfigured signal is removed from a reception signal stored in a buffer.

Signals of other antennas are processed in the same manner and along the same path, and then coupled by a coupler 280.

The PARC is a MIMO system technique for a high speed downlink packet access (HSDPA) proposed by Lucent, which allows, unlike the V-BLAST, each transmission antenna to use a different data transmission rate to thereby increase a transmission capacity. In this case, the transmitting end transmits an encoded signal independent by transmission antennas.

The PARC system is different from the V-BLAST system, the existing single-rate MIMO technique in the aspect that each antenna has a different data transmission rate (modulation and coding).

Namely, the PARC system allows each antenna to control the data transmission rate independently more minutely, which leads to enhancement of a substantial transmission capacity of an overall system. In this case, although more bits are required for informing about a state of channels of each antenna than in techniques proposed for the single rate MIMO system, a reference set can be determined.

In other words, in the PARC system, in order to determine a MCS (modulation & Coding Scheme) set valid for each antenna, an SINR (Signal to Interference Noise Ratio) of each transmission antenna as received by each reception antenna is calculated.

At this time, in order to select a channel coding and modulation method to be used at each antenna, the SINR received through each antenna is measured, based on which a combination of a channel coding method and a modulation method to be used at each antenna is selected.

[Table 1] and [Table 2] show examples of combinations of transmission rate of transmitted data and an MCS in the MIMO system having four transmission antennas and four reception antennas.

**[Table 1]**

| bps/Hz | Data rate (Nbps) | Constellation | Coding rate |
|---|---|---|---|
| 3 | 7.2 | 16 QAM | 3/4 |
| 2 | 4.8 | 16 QAM | 1/2 |
| 1.5 | 3.6 | QPSK | 3/4 |
| 1 | 2.4 | QPSK | 1/2 |
| 0.5 | 1.2 | QPSK | 1/4 |

**[Table 2]**

| Index | Rate: Mbps | Ant1 | Ant2 | Ant3 | Ant4 | | Index | Rate: Mbps | Ant1 | Ant2 | Ant3 | Ant4 |
|---|---|---|---|---|---|---|---|---|---|---|---|---|
| 1 | 28.8 | 3 | 3 | 3 | 3 | | 33 | 15.6 | 1 | 2 | 2 | 1.5 |
| 2 | 26.4 | 3 | 3 | 2 | 3 | | 34 | 15.6 | 1 | 2 | 1.5 | 2 |
| 3 | 26.4 | 3 | 2 | 3 | 3 | | 35 | 18.0 | 1 | 1.5 | 2 | 3 |
| 4 | 26.4 | 2 | 3 | 3 | 3 | | 36 | 15.6 | 1 | 1.5 | 2 | 2 |
| 5 | 24.0 | 2 | 3 | 3 | 2 | | 37 | 20.4 | 0.5 | 2 | 3 | 3 |
| 6 | 24.0 | 2 | 3 | 2 | 3 | | 38 | 15.6 | 0.5 | 2 | 2 | 2 |
| 7 | 24.0 | 2 | 2 | 3 | 3 | | 39 | 14.4 | 3 | | 3 | |
| 8 | 21.6 | 2 | 2 | 3 | 2 | | 40 | 14.4 | | 3 | | 3 |
| 9 | 21.6 | 2 | 2 | 2 | 3 | | 41 | 12.0 | 3 | | 2 | |
| 10 | 19.2 | 2 | 2 | 2 | 2 | | 42 | 12.0 | | 3 | | 2 |
| 11 | 22.8 | 2 | 1.5 | 3 | 3 | | 43 | 12.0 | 2 | | 3 | |
| 12 | 20:4 | 2 | 1.5 | 2 | 3 | | 44 | 12.0 | | 2 | | 3 |
| 13 | 18.0 | 2 | 1.5 | 2 | 2 | | 45 | 9.6 | 2 | | 2 | |
| 14 | 19.2 | 2 | 1.5 | 1.5 | 2 | | 46 | 9.6 | | 2 | | 2 |
| 15 | 16.8 | 2 | 1 | 2 | 2 | | 47 | 8.4 | 2 | | 1.5 | |
| 16 | 25.2 | 1.5 | 3 | 3 | 3 | | 48 | 8.4 | | 2 | | 1.5 |
| 17 | 22.8 | 1.5 | 3 | 2 | 3 | | 49 | 10.8 | 1.5 | | 3 | |
| 18 | 22.8 | 1.5 | 2 | 3 | 3 | | 50 | 10.8 | | 1.5 | | 3 |
| 19 | 20.4 | 1.5 | 2 | 2 | 3 | | 51 | 8.4 | 1.5. | | 2 | |
| 20 | 18.0 | 1.5 | 2 | 2 | 2 | | 52 | 8.4 | | 1.5 | | 2 |
| 21 | 19.2 | 1.5 | 2 | 1.5 | 2 | | 53 | 9.6 | 1 | | 3 | |
| 22 | 21.6 | 1.5 | 1.5 | 3 | 3 | | 54 | 9.6 | | 1 | | 3 |
| 23 | 21.6 | 1.5 | 1.5 | 3 | 3 | | 55 | 7.2 | 3 | | | |
| 24 | 16.8 | 1.5 | 1.5 | 2 | 2 | | 56 | 7.2 | | | 3 | |
| 25 | 14.4 | 1.5 | 1.5 | 2 | 1 | | 57 | 4.8 | 2 | | | |
| 26 | 15.6 | 1.5 | 1.5 | 1.5 | 2 | | 58 | 4.8 | | | 2 | |
| 27 | 15.6 | 1.5 | 1 | 2 | 2 | | 59 | 3.6 | 1.5 | | | |
| 28 | 24.0 | 1 | 3 | 3 | 3 | | 60 | 3.6 | | | 1.5 | |
| 29 | 21.6 | 1 | 3 | 2 | 3 | | 61 | 2.4 | 1 | | | |
| 30 | 21.6 | 1 | 2 | 3 | 3 | | 62 | 2.4 | | | 1 | |
| 31 | 19.2 | 1 | 2 | 2 | 3 | | 63 | 1.2 | 0.5 | | | |
| 32 | 16.8 | 1 | 2 | 2 | 2 | | 64 | 1.2 | | | 0.5 | |

As shown in [Table 1], when the modulation method is performed at 16QAM and a coding rate is 3/4, the data rate is the maximum, which corresponds the number of transmission bits per unit frequency of 3. And this case can be matched to a case where the SINR calculated at the reception antenna is the maximum.

The next fastest data rate is when the modulation method is performed at the 16QAM and the coding rate is 1/2, which corresponds the number of transmission bits per unit frequency of 2. In this manner, each number of transmission bits per unit frequency is determined according to the modulation methods and the coding rates, and the number of transmission bits per unit frequency is allocated to the four transmission antennas of [Table 2].

[Table 2] shows examples of combinations of transmission rates in the system using four transmission antennas and four reception antennas. In [Table 2], the index '1' indicates that the number of transmission bits per unit frequency of each of the four transmission antennas is 3 and a data transmission rate is the highest, namely, 28.8.

In such a 4 x 4 PARC system (namely, the PARC system having four transmission antennas and four reception antennas), in case of the indices from 1 to 38 having a good channel situation because of the relatively shorter distance between the transmitting end and the receiving end, the four transmission antennas can be all used to transmit data, but in case of the indices from 39 to 54 having a bad channel situation because of a relatively longer distance between the transmitting end and the receiving end, two antennas with the larger number of transmission bits per unit frequency are selected from the four transmission antennas to transmit data therethrough.

However, in the afore-mentioned related art, the coding rating and modulation method is separately performed on each antenna in consideration of the channel situation of each antenna, and when the coding is performed, interleaving is also performed, but the interleaving in this context is merely performed in a time domain at each antenna. Thus, the related art fails to perform the interleaving in a space domain with respect to the entire signals to be transmitted through the multiple antennas, so it is disadvantageous in that a space diversity gain cannot be additionally obtained.

### SUMMARY OF THE INVENTION

Therefore, an object of the present invention is to provide an apparatus and method for processing a signal in a multi-input/multi-output (MIMO) communication system capable of obtaining a diversity gain in a space domain and thus enhancing a communication quality by performing a spatial interleaving in the MIMO communication system employing a PARC (Per-Antenna Rate Control) method.

To achieve at least the above objects in whole or in parts, there is provided a signal receiving unit in an MIMO communication system, wherein data separately received through each reception antenna is decoded and deinterleaved differently according to each reception antenna, and then again deinterleaved collectively.

The signal receiving unit includes a unit for estimating each channel situation of signals received through multiple transmission antennas and feeding it back to a transmitting end.

The received data has been undergone an interleaving step separately performed by each transmission antenna and an interleaving step collectively performed on the entire multiple transmission antennas.

The signal receiving unit further includes a unit for estimating a channel through a pilot signal transmitted separately from each transmission antenna.

To achieve at least these advantages in whole or in parts, there is further provided a signal transmission method in a multi-input/multi-output (MIMO) communication system, including: coding and interleaving each demultiplexed data; entirely interleaving the coded and interleaved multiple data again; and modulating each data, spreading and scrambling the modulated data, and then transmitting it through multiple transmission antennas.

The data is coded at a different rate and modulated differently for each transmission antenna in consideration of a channel situation of each transmission antenna.

To achieve at least these advantages in whole or in parts, there is further provided a signal reception method in a multi-input/multi-output (MIMO) communication system, including: receiving data through multiple reception antennas, dispreading and descrambling it, and then, demodulating and estimating the despread and descrambled data; entirely deinterleaving each data; and separately decoding and deinterleaving each data.

The signal receiving method in the MIMO communication system further includes transmitting one index of a table, which includes each size of signal blocks transmittable at each transmission antenna, modulation methods and coding rates which has been determined and agreed with a transmitting end, as a feedback signal by using an SINR (Signal to Interference Noise Ratio) of the data estimated at each reception antenna.

To achieve at least these advantages in whole or in parts, there is further provided a signal processing method in a multi-input/multi-output (MIMO) communication system, including: interleaving coded bits to be transmitted through each transmission antenna; interleaving the coded bits entirely again; modulating the coded bits, spreading and scrambling the modulated data, and then transmitting the data through multiple transmission antenna; receiving the data through multiple reception antennas, dispreading and descrambling the data, and the demodulating and estimating it; entirely deinterleaving the data received through each reception antenna; and decoding and deinterleaving the data for each reception antenna.

According to the p resent invention, a diversity gain over a space domain can be obtained by performing spatial interleaving in case of using a different coding rate and modulation method at each transmission antenna, and thus, a communication quality can be enhanced.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:
Figure 1 is a view showing the construction of a transmitting end of a multi-input/multi-output (MIMO) communication system employing a PARC (Per-Antenna Rate Control) method in accordance with the conventional art;
Figure 2 is a view showing the construction of a receiving end of the MIMO communication system employing the PARC (Per-Antenna Rate Control) method in accordance with the conventional art;
Figure 3 is a block diagram showing the construction of a transmitting end of a MIMO communication system employing in accordance with a first embodiment of the prevent invention;
Figure 4 is a block diagram showing the construction of a receiving end of a MIMO communication system employing in accordance with the first embodiment of the prevent invention;
Figure 5 is a block diagram showing the construction of a transmitting end of a MIMO communication system employing in accordance with a second embodiment of the prevent invention; and
Figure 6 is a block diagram showing the construction of a receiving end of a MIMO communication system employing in accordance with the second embodiment of the prevent invention.

### DETAILED DESCRIPTION OF THE PREFERRED EMBODIMENTS

A preferred embodiment of the present invention will now be described with reference to the accompanying drawings.

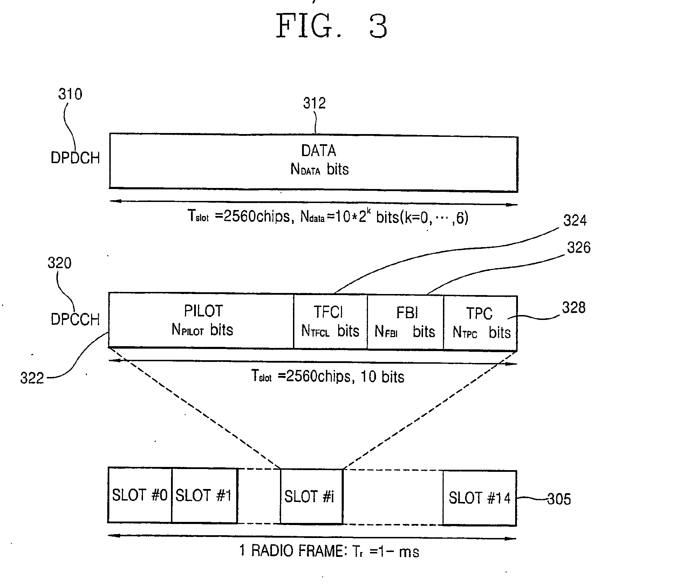

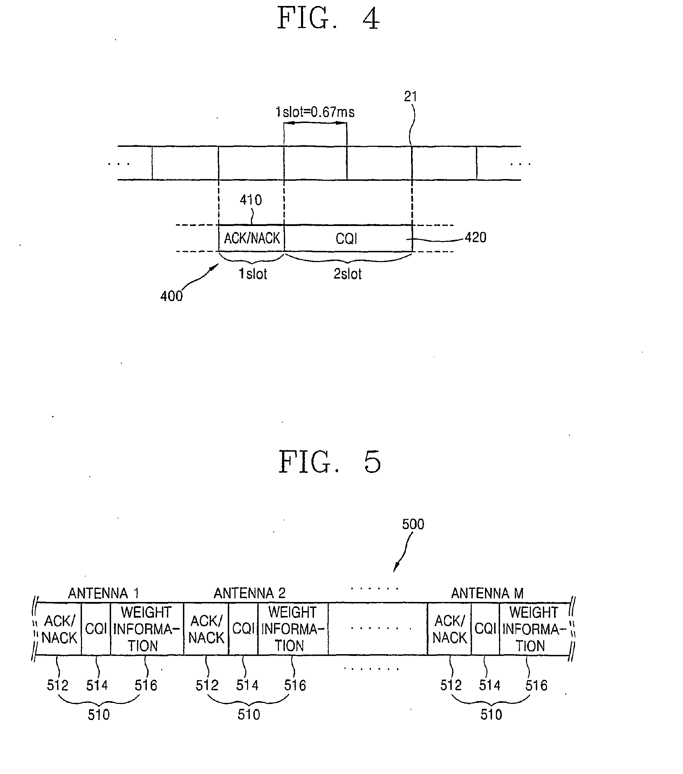

Figure 3 is a block diagram showing the construction of a transmitting end of a multi-input/multi-output (MIMO) communication system employing in accordance with a first embodiment of the prevent invention and Figure 4 is a block diagram showing the construction of a receiving end of a MIMO communication system employing in accordance with the first embodiment of the prevent invention.

The construction and operation of the MIMO communication system employing a signal processing unit in accordance with a first embodiment of the present invention will now be described with reference to Figures 3 and 4.

The present invention assumes a closed-loop MIMO mobile communication system and an FDD system, and a receiving end feeds back a situation of a forward channel because a movement channel situation from a transmitting end to the receiving end cannot be known. However, in the TDD system, because the forward channel a nd a reverse channel are the same, although the receiving end does not feedback, the transmitting end can estimate the forward channel.

In the preferred embodiment of the present invention, it is assumed that a MIMO system has the M number of transmission antennas 310 and the N number of reception antennas 410 (in this case N ≥ M).

With reference to Figure 3, a transmitting end of the MIMO system includes a data generation unit (not shown) generating data to be transmitted, demultiplexer (DMUX) 310 for distributing the data to each antenna; an interleaving unit 320 interleaving each coded bit; a spatial interleaving unit 330 interleaving the interleaved bits collectively; a modulation unit 340 modulating the interleaved data; a unit 350 spreading and scrambling the modulated data; and the M number of transmission antennas 360 transmitting modulated data, respectively.

The transmitting end performs coding on each data at a different coding rate and modulates it differently in consideration of a channel situation of each transmission antenna, performs interleaving on each coded bit, performs (spatial) interleaving on the interleaved bits collectively; and then transmits the data.

The channel situation of each transmission antenna is determined according to information fed back from the receiving end, and the feedback information can be a situation of a channel estimated by a pilot signal transmitted separately from each antenna or information including a calculated SINR of each transmission antenna as received by the reception ante nna in order to determine an MCS valid for each transmission antenna. In this case, in order to select a channel coding method and a modulation method used for each transmission antenna, an SINR transmitted through each transmission antenna is measured and then combination of a channel coding method and a modulation method to be used for each transmission antenna is selected based on the measured SINR value.

In addition, in the transmitting end of the present invention, after the coded bits are interleaved for each transmission antenna, the interleaved bits are collectively interleaved again. Thus, because the interleaving is performed on the entire signals to be transmitted through the multiple antennas in the space domain, a spatial diversity gain can be additionally obtained.

The transmitting end operates as follows. First, high speed data streams sequentially generated from the data generating unit are demultiplexed through the demultiplexer (DEMUX) 310 so as to be respectively transmitted through the multiple transmission antennas. Herein, the demultiplexing refers to dividing consistent data into a plurality of sub-data according to a predetermined rule. The high speed data stream is a bit level of signal. At this time, it is assumed that information as to how much data is to be distributed to each transmission antenna is based on a feedback signal transmitted from the receiving end, as mentioned above. Or, the transmitting end can determined how much data is to be distributed to each transmission antenna upon receiving a feedback signal indicating a channel situation of each transmission.

Thereafter, the respective demultiplexed sub-streams for each transmission antenna are coded and interleaved by a signal processor, namely, by the interleaving unit 320 which interleaves codes bits transmitted by transmission antennas. Also, in this case, it is assumed that which coding rate is to be used at each transmission antenna is based on the feed back signal received from the receiving end. Or, the transmitting end itself can directly determine a coding rate to be used at each transmission antenna based on a feedback signal indicating a channel situation of each transmission antenna as received from the receiving end.

Herein, the interleaving is performed on each coded bit separately transmitted through each transmission antenna, which is performed only in a time domain of each transmission antenna.

In this respect, in the present invention, after the interleaving in the time domain, the coded bits are again interleaved collectively (spatially). Namely, the interleaving is additionally performed in a space domain, whereby a spatial diversity gain can be obtained.

Next, each data is mapped to a symbol through modulation, and the mapped symbols are inputted into the spreader, namely, the spreading/scrambling unit 350, and multiplied by a spreading code 1, which is then coded into scrambling codes, and then transmitted through each transmission antenna 360.

Also, in this case, it is assumed that which modulation method is to be used at each transmission antenna is based on a feedback signal received from the receiving end as stated above. Or, the transmitting end itself can determine a modulation method to be used at each transmission antenna based on a feedback signal indicating a channel situation of each transmission antenna as received from the receiving end.

The receiving end of the MIMO system in accordance with the first embodiment of the present invention will now be described with reference to Figure 4.

As shown, the receiving end includes a plurality of reception antennas 410 receiving signals; a unit 420 for dispreading and descrambling the received data; a unit for estimating and demodulating the despread and descrambled data; a unit 440 for spatially (collectively) deinterleaving the estimated and demodulated data; a unit 450 for separately deinterleaving the collectively deinterleaved data; and a multiplexer 460 for adding the separately deinterleaved data. The receiving end can additionally include a unit 470 for estimating a channel through a pilot signal separately received from each transmission antenna of the transmitting end.

Since the transmitting end has the deinterleaving unit 330 for performing spatial interleaving on coded bits collectively, it is noted that the receiving end also includes the deinterleaving unit 440 for performing deinterleaving on the coded bits collectively.

The receiving end of the present invention operates as follows.

When the data is demultiplexed and then coded into the scrambling code at the transmitting end, signals of each transmission antenna can be independently decoded through the multiple reception antennas of the receiving end. Namely, the data transmitted through each transmission antenna as shown in Figure 3 is independently received through the plurality of reception ante nnas, despreaded and descrambled, and their symbols are estimated, and then dermodulated.

Thereafter, the demodulated signals are collectively deinterleaved. This step corresponds to the interleaving step performed on the coded bits in the transmitting end. Through this additional interleaving step performed in the space domain, the spatial diversity gain can be obtained.

And then, the collectively deinterleaved data is decoded and deinterleaved. At this time, one index of a table which includes sizes of signal blocks transmissible at each transmission antenna, modulation methods, coding rates which have been predetermined and agreed based on an SINR of data estimated at each reception antenna with the transmitting end is transmitted as a feedback signal.

Subsequently, bits of symbols which have been transmitted from each transmission antenna are detected based on the decoded data, a nd then, bit streams which have been transmitted from the transmitting end is fo und through the multiplexer.

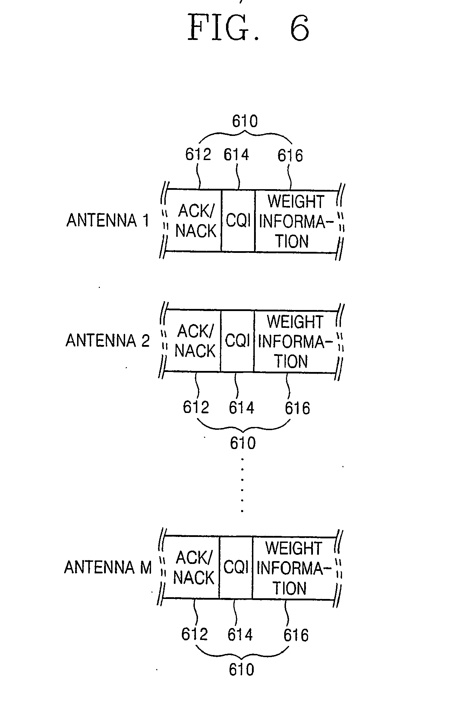

Figure 5 is a block diagram showing the construction of a transmitting end of a MIMO communication system employing in accordance with a second embodiment of the prevent invention, and Figure 6 is a block diagram showing the construction of a receiving end of a MIMO communication system employing in accordance with the second embodiment of the prevent invention.

With reference to Figures 5 and 6, the transmitting and receiving ends of the second embodiment of the present invention are constructed with the same elements as those in the transmitting and receiving ends of the first em bodiment of the present invention.

The only difference between the first and second embodiments of the present invention is that the unit 320 for interleaving coded bits and the unit 330 for collectively interleaving coded bits are interchanged in their positions in the transmitting end, and the unit 440 for collectively deinterleaving coded bits and the unit 450 for separately deinterleaving coded bits are interchanged in their positions in the receiving end.

Accordingly, likewise in the first embodiment of the present invention, in the second embodiment of the present invention, interleaving is also additionally is performed in the space domain to obtain the spatial diversity gain like the first embodiment, in this respect, however, the order of the interleaving step performed by each transmission antenna and the interleaving step performed by the entire transmission antennas is changed, and accordingly, the order of the deinterleaving step performed by each reception antenna and the deinterleaving step performed by the entire reception antennas is changed.

Namely, compared with the signal processing apparatus and method in accordance with the first embodiment of the present invention, the signal processing apparatus and method in the MIMO communication system in accordance with the second embodiment of the present invention is constructed such that the interleaving step at the time domain and the interleaving step at the space domain in the transmitting end are interchanged, and accordingly, the deinterleaving steps in the receiving end are interchanged. Other construction and operation are the same, so description of which is thus omitted.

As so far described, the apparatus and method for processing signals in a MIMO communication system have such an advantage that when a different coding rate and modulation method are used at each transmission antenna , the special interleaving is performed to obtain a diversity gain in the space domain, and thus, the communication quality can be enhanced.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A signal receiver in an MIMO communication system, wherein data separately received through each reception antenna is decoded and deinterleaved differently according to each reception antenna, and then again deinterleaved collectively spatially.

2. The signal receiver of claim 1 includes a unit for estimating a channel situation transmitted from a plurality of transmission antennas and feeding it back to a transmitting end.

3. The signal receiver of claim 1, wherein the received data has been undergone an interleaving step separately performed by each transmission antenna and an interleaving step collectively performed on the entire multiple transmission antennas.

4. The signal receiver of claim 1 further includes a unit for estimating a channel through a pilot signal received separately from each transmission antenna.

5. A signal transmission method in a multi-input/multi-output, MIMO, communication system, comprising:
coding and interleaving each demultiplexed data;
collectively spatially interleaving the coded and interleaved multiple data again; and
modulating each data, spreading and scrambling the modulated data, and then transmitting it through multiple transmission antennas.

6. The method of claim 5, wherein the data is coded at a different rate and modulated differently for each transmission antenna in consideration of a channel situation of each transmission antenna.

7. A signal reception method in a multi-input/multi-output, MIMO, communication system, comprising:
receiving data through multiple reception antennas, dispreading and descrambling it, and then, demodulating and estimating the despread and descrambled data;
collectively spatially deinterleaving the data; and
separately decoding and deinterleaving the data.

8. The method of claim 7, further comprising:
transmitting one index of a table, which includes each size of signal blocks transmittable at each transmission antenna, modulation methods and coding rates which has been determined and agreed with a transmitting end, as a feedback signal by using an SINR, Signal to Interference Noise Ratio, of the data estimated at each reception antenna.

9. A signal processing method in a multi-input/multi-output, MIMO, communication system, comprising:
interleaving coded bits to be transmitted through each transmission antenna; interleaving the coded bits entirely again;
modulating the coded bits, spreading and scrambling the modulated data, and then transmitting the data through multiple transmission antennas;
receiving the data through multiple reception antennas, dispreading and descrambling the data, and the demodulating and estimating it;
collectively spatially deinterleaving the data received through each reception antenna; and
decoding and deinterleaving the data for each reception antenna.

## Patentansprüche

1. Signalempfänger in einem MIMO-Kommunikationssystem, wobei über jede Empfangsantenne separat empfangene Daten entsprechend jeder Empfangsantenne unterschiedlich decodiert und entschachtelt und dann erneut kollektiv räumlich entschachtelt werden.

2. Signalempfänger nach Anspruch 1, der eine Einrichtung zum Bewerten einer von einer Mehrzahl Sendeantennen übertragenen Kanalsituation und Zurückführen derselben an ein Sendeende umfasst.

3. Signalempfänger nach Anspruch 1, wobei die empfangenen Daten einem von jeder Sendeantenne separat durchgeführten Verschachtelungsschritt und einem von der Gesamtheit der mehreren Sendeantennen durchgeführten Verschachtelungsschritt unterzogen wurden.

4. Signalempfänger nach Anspruch 1, der ferner eine Einrichtung zum Bewerten eines Kanals mittels eines separat von jeder Sendeantenne empfangenen Pilotsignals umfasst.

5. Signalübertragungsverfahren in einem Multi-Input/Multi-Output-, MIMO, Kommunikationssystem, das umfasst:
- Codieren und Verschachteln sämtlicher demultiplexter Daten,
- erneutes kollektives räumliches Verschachteln der codierten und verschachtelten Mehrzahl Daten, und
- Modulieren sämtlicher Daten, Spreizen und Verwürfeln der modulierten Daten sowie anschließendes Senden derselben über mehrere Sendeantennen.

6. Verfahren nach Anspruch 5, wobei die Daten, unter Berücksichtigung einer Kanalsituation jeder Sendeantenne, für jede Sendeantenne mit einer unterschiedlichen Rate codiert und unterschiedlich moduliert werden.

7. Signalempfangsverfahren in einem Multi-Input/Multi-Output-, MIMO, Kommunikationssystem, das umfasst:
- Empfangen von Daten über mehrere Empfangsantennen, Entspreizen und Entwürfeln derselben sowie anschließendes Demodulieren und Bewerten der entspreizten und entwürfelten Daten,
- kollektives räumliches Entschachteln der Daten, und
- separates Decodieren und Entschachteln der Daten.

8. Verfahren nach Anspruch 7, das ferner umfasst:
- Senden eines Index einer Tabelle, die sämtliche Signalblockgrößen, die von jeder Sendeantenne gesendet werden können, Modulationsverfahren und Codierraten enthält, die festgelegt und mit einem Sendeende abgestimmt worden ist, als Rückkopplungssignal unter Verwendung eines SINR, Abstand Signal zu Interferenzrauschen, der an jeder Empfangsantenne bewerteten Daten.

9. Signalverarbeitungsverfahren in einem Multi-Input/Multi-Output-, MIMO, Kommunikationssystem, das umfasst:
- Verschachteln über jede Sendeantenne zu sendender codierter Bits, erneutes vollständiges Verschachteln der codierten Bits,
- Modulieren der codierten Bits, Spreizen und Verwürfeln der modulierten Daten sowie anschließendes Senden der Daten über mehrere Sendeantennen;
- Empfangen der Daten über mehrere Empfangsantennen, Entspreizen und Entwürfeln der Daten sowie Demodulieren und Bewerten derselben,
- kollektives räumliches Entschachteln der über jede Empfangsantenne empfangenen Daten, und
- Decodieren und Entschachteln der Daten für jede Empfangsantenne.

## Revendications

1. Récepteur de signal dans un système de communication MIMO, dans lequel des données reçues séparément par l'intermédiaire de chaque antenne de réception sont décodées et désentrelacées différemment conformément à chaque antenne de réception, puis ensuite à nouveau collectivement désentrelacées de manière spatiale.

2. Récepteur de signal selon la revendication 1, comprenant une unité destinée à estimer une situation de canal transmis depuis une pluralité d'antennes d'émission et à le renvoyer vers une extrémité d'émission.

3. Récepteur de signal selon la revendication 1, dans lequel les données reçues ont subi une étape d'entrelacement réalisée séparément par chaque antenne d'émission et une étape d'entrelacement réalisée collectivement sur la totalité des multiples antennes d'émission.

4. Récepteur de signal selon la revendication 1, comprenant en outre une unité destinée à estimer un canal par l'intermédiaire d'un signal pilote reçu séparément depuis chaque antenne d'émission.

5. Procédé d'émission de signal dans un système de communication à entrées multiples et à sorties multiples, MIMO, comprenant les étapes consistant à :
coder et entrelacer chaque donnée démultiplexée ;
à nouveau entrelacer collectivement de manière spatiale les multiples données codées et entrelacées ; et
moduler chaque donnée, étaler et brouiller les données modulées, puis les transmettre par l'intermédiaire des multiples antennes d'émission.

6. Procédé selon la revendication 5, dans lequel les données sont codées à un taux différent et modulées différemment pour chaque antenne d'émission en prenant en considération une situation de canal de chaque antenne d'émission.

7. Procédé de réception de signal dans un système de communication à entrées multiples et à sorties multiples, MIMO, comprenant les étapes consistant à :
recevoir des données par l'intermédiaire de multiples antennes de réception, les désétaler et les désembrouiller, et ensuite démoduler et estimer les données désétalées et désembrouillées ;
désentrelacer collectivement de manière spatiale les données ; et
décoder et désentrelacer séparément les données.

8. Procédé selon la revendication 7, comprenant en outre les étapes consistant à :
transmettre un index d'une table, qui comprend chaque taille de blocs de signal pouvant être transmis à chaque antenne d'émission, des procédés de modulation et des taux de codage, qui a été déterminé et en accord avec une extrémité d'émission, en tant que signal de rétroaction en utilisant un rapport signal/brouillage plus bruit, SINR, des données estimées au niveau de chaque antenne de réception.

9. Procédé de traitement de signal dans un système de communication à entrées multiples et à sorties multiples, MIMO, comprenant les étapes consistant à :
entrelacer des bits codés devant être émis par l'intermédiaire de chaque antenne d'émission ; entrelacer à nouveau les bits codés entièrement ;
moduler les bits codés, étaler et brouiller les données modulées, puis émettre les données par l'intermédiaire des multiples antennes d'émission ;
recevoir les données par l'intermédiaire des multiples antennes de réception, désétaler et désembrouiller les données, et les démoduler et les estimer ;
désentrelacer collectivement de manière spatiale les données reçues par l'intermédiaire de chaque antenne de réception ; et
décoder et désentrelacer les données pour chaque antenne de réception.
